# EUROPÄISCHE PATENTSCHRIFT

(11) **EP 2 881 154 B1**
(45) Veröffentlichungstag und Bekanntmachung des Hinweises auf die Patenterteilung: **21.02.2018**
(21) Anmeldenummer: 13195699.7
(22) Anmeldetag: 04.12.2013
(51) Int. Cl.: B01D 3/06

(54) **Vorrichtung und Verfahren zur Entspannungsverdampfung**
Method and device for flash evaporation
Dispositif et procédé de vaporisation par détente

(43) Veröffentlichungstag der Anmeldung: 10.06.2015
(73) Patentinhaber: Fluitec Invest AG, 8442 Hettlingen (CH)
(72) Erfinder: Georg, Alain, 8442 Hettingen (CH); Vögeli, Tobias, 8400 Winterthur (CH); Altenburger, Daniel, 8461 Oerlingen (CH); Andreoli, Silvano, 8413 Neftenbach (CH)
(74) Vertreter: Clerc, Natalia

(56) Entgegenhaltungen:
- EP-A1- 1 067 352
- EP-A1- 1 556 418
- EP-A1- 2 113 732
- WO-A1-2008/141472
- DE-A1- 2 808 854
- US-A1- 2004 136 882

## Beschreibung

### TECHNISCHES GEBIET

Die vorliegende Erfindung betrifft eine Vorrichtung und ein Verfahren zur Trennung eines Fluidgemischs mittels kontinuierlicher Entspannungsverdampfung.

### STAND DER TECHNIK

Durch Entspannungsverdampfung entsteht aus einem Fluidgemisch ein Dampf, in welchem sich leichter flüchtige Komponenten des Fluidgemischs anreichern. Die Entspannungsverdampfung ist somit eine einstufige Destillation, wobei in diesem Verfahren die Trennung des Fluidgemischs über eine oder mehrere Stufen erfolgen kann.

Üblicherweise wird das Fluidgemisch in einem Platten- oder Rohrbündelwärmetauscher bei einem Vordruck P1 erhitzt und anschließend auf einen niedrigeren Druck P2 (P2 < P1) in einem Entspannungs- und Trennbehälter entspannt. Die Entspannung erfolgt, wenn der Druck durch Freigeben eines Austrittsquerschnitts (z.B. einem Ventil, einer Düse, einer Blende, einer Verengung oder eines Rohres welches einen ausreichenden Druckverlust erzeugt) schlagartig abgesenkt wird. Im Entspannungs- und Trennbehälter kommt es so zur Entspannungsverdampfung, also zur Überhitzung der Flüssigkeit und damit zur Entstehung von Dampf. Die überhitzte Flüssigkeit und ihr Dampf befinden sich nicht mehr im Gleichgewicht. Dieser Zustand bedeutet, dass die Flüssigkeit Wärme abgeben muss - in diesem Falle geschieht das durch einen Energieeintrag an Siedekeime und schon vorhandene Dampfblasen im Entspannungs- und Trennbehälter. Dies führt zum Blasenwachstum und deren Aufstieg und schließlich zum Aufwallen der Flüssigkeit und zur Ausspeicherung von Masse und Energie in Form von Dampf - der Vorgang, der im Allgemeinen als "Kochen" bezeichnet wird. Der Dampf transportiert somit Energie aus dem Entspannungs- und Trennbehälter.

Typische Anwendungen der Entspannungsverdampfung sind:
- das Trennen von leicht flüchtigen Stoffen aus einer Flüssigkeit,
- das Eindicken von Fruchtsäften;
- die Herstellung von Hartbonbons;
- die Aufbereitung von Zucker;
- das Kochen einer Würze;
- die Aufbereitung von industriellem Abwasser;
- die Herstellung von Konzentraten;
- die Polykondensation von Kunststoffen sowie
- die Restentgasung von Polymeren.

Die Entspannungsverdampfung eignet sich somit zur Trennung einer Vielzahl von Fluidgemischen, welche je nach Zusammensetzung und Anwendungsbereich sehr unterschiedliche Viskositäten aufweisen können. Die Viskosität eines Fluidgemischs kann sich auch während des Prozesses verändern.

Die Entspannungsverdampfung ist ein sehr alter Prozess und wird insbesondere in unzähligen Patentpublikationen beschrieben.

So zeigt beispielsweise die DE 40 19 916 einen zweistufigen Entspannungsverdampfer zur Herstellung von Hartbonbons. Bei dieser Vorrichtung erfolgt die Zufuhr der Verdampfungswärme über eine Rohrschlange, welche in einem Ausdampfraum mit Atmosphärendruck führt. In diesem Ausdampfraum verdampft ein Teil des Wassers. Der Dampf entweicht über den Brüdenabzug. Der Grundstoff fliesst durch ein Überströmventil in den unter dem Ausdampfraum befindlichen Vakuumraum. Im Vakuumraum herrscht ein Unterdruck, bei welchem die Lösung bis auf ein Restwassergehalt ausgedampft wird. Bei dieser Bauform muss davon ausgegangen werden, dass das Verweilzeitverhalten ungenügend ist und bei einem Viskositätsanstieg das Druckreduzierventil verkleben kann.

US 2004/0136882 offenbart eine Vorrichtung für einen typischen Entspannungsprozess. Ein Polymergemisch wird in einem Flash-Line-Heater dosiert und in einer Flash-Kammer /Gas-Separator entspannt. Zur Bewältigung der Schaumbildung ist ein Schaumschläger/zerstörer in Form einer Flusen-Kammer vorhanden.
DE 39 41 278 beschreibt einen Fallstromverdampfer zur Herstellung eines Konzentrats.

Bei dieser Vorrichtung erfolgt die Verdampfung zweistufig. Dabei wird in einem oberen Brüdenraum ein Teil des Dampfes abgezogen. Eine Teilentspannung erfolgt über ein Bündel von Verdampfungsrohren, wobei das Fluidgemisch auf diese Rohre verteilt wird. In einem unteren Brüdenraum wird ein weiterer Teil des Brüden abgezogen. Diese Vorrichtung wird in einer sich wiederholenden Schleife (Loopschaltung) betrieben. Dabei wird das Produkt vollständig rückvermischt, was bei sensitiven Produkten von Nachteil sein kann.

Diese Art von Verdampfer eignet sich besonders für Fluidgemische mit geringer Viskosität.

US 3 853 672 zeigt einen Fallstromverdampfer für hochviskose Polymere mit einem Rohrbündelwärmetauscher. Auch hier wird das Fluidgemisch verteilt auf mehrere Rohre durch diese geleitet und gelangt anschliessend in eine erste Entspannungskammer. Der leicht flüchtige Dampf wird vertikal von oben nach unten strömend bei geringem Druck verdampft. Ein Druckreduzierventil führt in eine zweite Entspannungskammer, wodurch in dieser zweiten Kammer die Entgasung bei einem tieferen Vakuum erfolgt. Nachteilig an dieser Anordnung ist die breite Verweilzeitverteilung.

DE 2 400 661 schlägt einen Fallstromverdampfer mit einem Rohrbündel-Wärmetauscher vor, wobei in den einzelnen Rohren zusätzlich statische Wendelelemente eingebaut sind. Die Wendelelemente wirken als statische Mischelemente, welche die aufgeteilte Flüssigkeit lokal in jedem einzelnen Bündelrohr mischen. Da die Flüssigkeitsanteile unabhängig voneinander in den einzelnen Rohren gemischt werden, können Maldistributionseffekte über den ganzen Querschnitt auftreten.

Es sind weitere Patentpublikationen bekannt, welche Strangverdampfer mit Rohrbündel-Wärmetauscher offenbaren, wobei die Rohre von dem zu erwärmenden Fluidgemisch durchströmt werden. Beispiele sind WO 2005/063351, DE 100 31 766 und EP 0 413 830.

EP 1 800 724 offenbart einen statischen Entgasungsapparat, bei welchem im Zulauf zur Phasentrennkammer ein Wärmetauscher mit eingebauten Mischerelementen vorhanden ist. In EP 1 556 418 wird eine bereits auf die Prozesstemperatur erhitzte Polymerschmelze in eine Zufuhrkammer geleitet, in welcher die Schmelze mit einem Schäumungsmittel besprüht wird. Der anschliessende statische Mischer soll sicherstellen, dass das Schäumungsmittel gut mit der Schmelze vermischt wird, bevor das Gemisch in den Entspannungsbehälter geleitet wird. Durch Beimischung eines derartigen Schäumungsmittels, auch Schleppmittel genannt, lässt sich der Partialdruck im Fluidgemisch ändern, wodurch sehr kleine Anteile an flüchtigen Stoffen aus dem Gemisch entfernt werden können.

Auch WO 02/051606 schlägt vor, einer Polymerschmelze zwecks Schaumbildung und Verbesserung der Entgasungseffektivität Schleppmitteln mit Hilfe eines statischen Mischers beizufügen, um eine Änderung des Partialdruckes zu erreichen und somit sehr kleine Anteile an flüchtigen Stoffen zu entfernen.

WO 99/67002 zeigt ein Verfahren zur Eindampfung einer viskosen Polymerlösung mit mindestens 30 Gew.-%, vorzugsweise mit mindestens 50 bis 70 Gew.-% Lösungsmitteln und Monomeren. Dabei wird die zu verdampfende Polymerlösung als Filmströmung mit einer Dampfaustrittsgeschwindigkeit von 200 bis 300 m/s durch ein beheiztes Wendelrohr geführt und strömt anschliessend in einen beheizten Abscheider. Die Heizungen des Wendelrohrs und des Abscheiders sind so ausgelegt, dass die Heizmitteltemperaturen im Wendelrohr und im Abscheider oberhalb des Erweichungspunktes des Polymers liegen. Ein weiteres wichtiges Verfahrenskriterium besteht darin, dass das im Wendelrohr gebildete Zweiphasengemisch aus Polymerschmelze und Lösungsmittel- und Monomerdämpfen in den beheizten Dampfabscheider bis auf einen Druck im Bereich von 10 mbar bis 800 mbarabs entspannt wird Bei diesem Verfahren wird ein grosser Teil im Wendelrohr verdampft. Das Wendelrohr hat jedoch den Nachteil, dass das Verhältnis der Oberfläche zum Volumen bei einer Massstabvergrösserung massiv abnimmt. Zudem kann der leichtflüchtige Dampf nicht koaleszieren, was zu starken Pulsationen führt, wenn nicht genügend Flüssigkeit verdampft wird.

Bei der Berechnung der Druckentlastung spielen Siedeverzug, Aufschäumen des Fluidgemischs durch Entspannungsverdampfung, Phasenseparation, kritisches Ausströmen sowie die thermo- und fluiddynamische Kopplung von Apparatekomponenten und - gruppen eine Rolle. Kenntnisse über diese physikalischen Vorgänge sind in der Regel nicht gruppen eine Rolle. Kenntnisse über diese physikalischen Vorgänge sind in der Regel nicht in ausreichendem Mass vorhanden, so dass stets längere Versuchsphasen notwendig sind, bis ein Trennungsprozess mit einer neuen Zusammensetzung eines Fluidgemischs die erwünschten Resultate bringt.

Ferner sind in EP 1 067 352 und WO 2008/141472 Mischer-Wärmetauscher offenbart, welche auf dem Markt als Fluitec Mischer-Wärmetauscher bekannt sind. Diese Mischer-Wärmetauscher weisen ein einen Strömungskanal bildendes Aussenrohr und einen darin angeordneter Mischeinsatz bestehend aus Stegplatten und einem Rohrbündel auf. Die Stegplatten sind paarweise gekreuzt angeordnet und reichen durch das Rohrbündel hindurch. Die Rohre des Rohrbündels sind mit den Stegplatten verbunden. Durch die Rohre fliesst ein Heiz- oder Kühlmedium. Die zu mischenden Flüssigkeitskomponenten umfliessen die Rohre des Rohrbündels, werden dank der Stegplatten gemischt und durch regelmässigen Kontakt mit der Wandung des Aussenrohrs erwärmt. Diese Fluitec Mischer-Wärmetauscher ermöglichen eine ständige Oberflächenerneuerung nicht nur am Rohrbündel sondern auch an der Wand des Strömungskanals.

EP 2 596 860 beschreibt einen Kreislaufreaktor zur kontinuierlichen Durchführung und Kontrolle von Reaktionen in flüssigen und/oder gasförmigen Medien, welcher mindestens einen statischen Fluitec Mischer-Wärmetauscher aufweist.

### DARSTELLUNG DER ERFINDUNG

Der Erfindung liegt die Aufgabe zugrunde, einen verbesserten kontinuierlich arbeitenden Entspannungsverdampfer sowie ein Verfahren zur Trennung eines Fluidgemischs mittels kontinuierlicher Entspannungsverdampfung zu schaffen, welche eine hohe Betriebssicherheit gewährleisten und ein schonendes schaumarmes Entspannen sicherstellen.

Diese Aufgabe lösen ein Entspannungsverdampfer mit den Merkmalen des Anspruchs 1 sowie ein Verfahren zum Trennen eines Fluidgemisches mit den Merkmalen des Anspruchs 11.

Der erfindungsgemässe kontinuierlich arbeitende Entspannungsverdampfer für die Trennung eines Fluidgemischs weist einen Wärmeübertrager, einen Entspannungsbehälter und ein Trenngefäss auf. Der Entspannungsbehälter ist erfindungsgemäss durch einen Mischer-Wärmetauscher gebildet, wobei der Mischer-Wärmetauscher ein Aussenrohr mit mindestens einem im Aussenrohr angeordneten Mischeinsatz aufweist und wobei das Aussenrohr einen Strömungskanal bildet zur Aufnahme eines Vollstroms des Fluidgemischs. In Strömungsrichtung des Fluidgemischs nach dem Wärmeübertrager und vor dem Mischer-Wärmetauscher ist ein Druckreduzierer vorhanden und das Trenngefäss ist in Strömungsrichtung dem Mischer-Wärmetauscher nachgeschaltet.

Das erfindungsgemässe Verfahren zum Trennen eines Fluidgemischs mittels kontinuierlich arbeitender Entspannungsverdampfung, in dem erfindungsgemässen Entspannungsverdampfer, weist mindestens folgende Schritte auf:
- Fördern eines Fluidgemischs mit Druckaufbau auf einen ersten Druck,
- Erwärmen des Fluidgemischs,
- Teilentspannen des erwärmten Fluidgemischs,
- Zuführen in einen Mischer-Wärmetauscher, wobei dem Fluidgemisch im Mischer-Wärmetauscher stetig Wärme zugeführt wird und wobei der Druck des sich im Mischer-Wärmetauscher befindlichen Fluidgemischs stetig abgesenkt wird und
- Restentgasung des Fluidgemischs bei einem zweiten Druck, welcher kleiner ist als der erste Druck in einem Trenngefäss, wobei ein Brüden aus dem Trenngefäss abgeleitet und ein Restgemisch des Fluidgemischs gesammelt wird.

Vorzugsweise wird das Fluidgemisch im Mischer-Wärmetauscher über die Länge und Breite des Mischer-Wärmetauschers global gemischt und um 90° umgelenkt.

Das Fluidgemisch besteht üblicherweise aus einem Gemisch von zwei oder mehr Flüssigkeiten oder mindestens einem Gas und mindestens einer Flüssigkeit oder Festkörpern und mindestens einer Flüssigkeit.

Im erfindungsgemässen Entspannungsverdampfer und im erfindungsgemässen Verfahren sind der Siedeverzug und das Aufschäumen in den Mischer-Wärmetauscher verlagert. Dieser bildet einerseits eine zusätzliche Wärmequelle, welche dem Fluidgemisch genügend Wärme homogen zuführen kann. Andererseits ermöglicht er eine globale Vermischung über seinen ganzen Querschnitt, was zu einer frühzeitigen Koaleszenz führt. Dies verhindert ein zu heftiges und ungewolltes Aufschäumen. Der erfindungsgemässe Entspannungsverdampfer ermöglicht so ein schonendes, schaumarmes und betriebssicheres Verdampfen bei einer definierten Entspannung.

Vorteilhaft ist zudem, dass der erfindungsgemässe Entspannungsverdampfer eine verbesserte Leistung bezüglich des Misch- und Verweilzeitverhaltens sowie auch des Wärmetauschs an den lokalen kritischen Stellen während der Entspannung aufweist.

Vorzugsweise weist der Mischer-Wärmetauscher eine Längsachse auf, welche eine Hauptströmungsrichtung innerhalb des Mischer-Wärmetauschers definiert, wobei die flüssigkeitsdurchströmbaren Querschnitte des Mischer-Wärmetauscher in dieser Hauptströmungsrichtung über annähernd die gesamte Länge des Mischer-Wärmetauschers derart gewählt sind, dass die Maldistribution minimiert und die Verweilzeitverteilung eng ist.

Vorzugsweise weist der Mischer-Wärmetauscher mindestens zwei in seiner Längsrichtung hintereinander angeordnete Mischelemente auf, welche um 90° zueinander gedreht sind. Die einzelnen Mischelemente sind vorzugsweise fest miteinander verbunden und sie sind bis auf ihre gedrehte Anordnung vorzugsweise identisch ausgebildet. Ein Mischelement weist vorzugsweise ein sich nicht wiederholendes Muster in der Anordnung der Umlenkelemente auf, welches sich erst im nächsten Mischelement wiederholt. Dank dieser Anordnung mischt der Mischer-Wärmetauscher das durchströmende Fluidgemisch über annähernd die gesamte Länge des Mischer-Wärmetauschers und über seine gesamten flüssigkeitsdurchströmten Querschnitte stetig und mit sich ändernden Radialrichtungen.

Benachbarte Mischeinsätze können gleich ausgerichtet sein oder jeweils um 90° zueinander versetzt sein. So entstehen Anordnungen, bei welchen zum Beispiel 10 Mischelemente nacheinander angeordnet sind und jeweils um 90° versetzt sind. Es lassen sich jedoch auch jedes, jedes zweite, dritte oder n-te Element drehen.

Die Länge einer Mischstrecke (auch Mischer genannt) bestehend aus einem oder mehreren gleich ausgerichteten Mischelementen beträgt vorzugsweise annähernd das Vierfache der Breite des Mischeinsatzes, noch bevorzugter annähernd das Doppelte und am bevorzugtesten entspricht die Länge dieser Mischstrecke bzw. Mischers annähernd Breite des Mischeinsatzes.

Dank dieses Mischers-Wärmetauschers entsteht ein einzigartiges, intensives, radiales Mischen über den ganzen Produkteraum. Diese Mischleistung lässt sich bei der Entspannungsverdampfung nutzen, um die Blasen im aufschäumenden Fluidgemisch zu kontaktieren und zu verbinden, resp. zu kolaeszieren.

In einer bevorzugten Ausführungsform weist der Mischer-Wärmetauscher mindestens einen Mischeinsatz und ein Rohrbündel auf, wobei der Mischer-Wärmetauscher Stegplatten aufweist, wobei das Rohrbündel aus mehreren Rohren gebildet ist, welche sich in Längsrichtung des Mischer-Wärmetauschereinsatzes erstrecken, und wobei die Stegplatten in einem schrägen Winkel zu den Rohren angeordnet und mit diesen fest verbunden sind. Die Stegplatten eines Mischeinsatzes bilden vorzugsweise das oben genannte Mischelement. Die Mischeinsätze sind vorzugsweise um 90° versetzt zueinander angeordnet.

Vorzugsweise reichen mindestens ein Teil der Stegplatten durch das Rohrbündel hindurch. Vorzugsweise sind die Stegplatten paarweise gekreuzt zueinander angeordnet. Die Rohre sind von einem Wärmeträgermedium durchströmbar und werden vom zu temperierenden Fluidgemisch umströmt.

Dieser Mischer-Wärmetauscher weist die grosse Wärmeübertragungskapazität eines Rohrbündelapparates auf. Der Produktstrom wird jedoch nicht in Parallelströme aufgeteilt, so dass der radiale Mischeffekt über den gesamten Produktstrom erfolgt.

Besonders geeignet sind die oben erwähnten sogenannten Fluitec Mischer-Wärmetauscher. Diese Fluitec Mischer-Wärmetauscher weisen spezielle Mischereinbauten auf und ermöglichen eine strömungstechnische Beherrschung der Quervermischung und der Oberflächenerneuerung. Diese Mischer-Wärmetauscher eignen sich somit insbesondere sowohl für chemische Reaktionen (z.B. Polymerisationen, Polykondensationen) mit Wärmetönung als auch für Temperiervorgänge (Erwärmung oder Kühlung) von hochviskosen Flüssigkeiten.

Fluitec Mischer-Wärmetauscher verfügen über eine sehr hohe Mischleistung. Aufgrund der sehr hohen erzielten Nusselt-Zahl sowie der grossen Oberfläche besitzen diese Mischer-Wärmetauscher ein ausgezeichnetes volumenbezogenes Wärmeübertragungsvermögen. Um die Mischleistung im Fluitec Wärmetauscher zu gewährleisten, weist er üblicherweise eine eher schlanke Form auf. Beispielsweise lassen sich Betriebsdrücke von 300 bar bei einer Temperatur von 300°C konstruktiv realisieren. Zahlreiche Untersuchungen haben auch gezeigt, dass Fluitec Mischer-Wärmetauscher ein ausgezeichnetes Verweilzeitverhalten aufweisen. Einige der konstruktiven Merkmale der Fluitec Mischer-Wärmetauscher sind stichwortartig beschrieben die Folgenden:
- die Mischer-Wärmetauscher-Fläche ist als Paket ausbaubar;
- die gesamte Oberfläche kann kontrolliert gereinigt und auch sterilisiert werden;
- der Mischer-Wärmetauscher-Querschnitt ist in der Hauptströmungsrichtung des Fluidgemischs geometrisch überall definiert und reduziert die Maldistribution auf ein Minimum, so dass eine enge Verweilzeitverteilung gewährleistet ist;
- durch die hohe volumenspezifische Wärmeübertragungsfläche sind die Fluitec Mischer-Wärmetauscher für hochviskose Flüssigkeiten und für temperatursensitive Medien besonders geeignet.

Es hat sich nun gezeigt, dass sich diese besonderen Eigenschaften vorteilhaft in der kontinuierlich arbeitenden Entspannungsverdampfung auswirken. Dadurch lässt sich der Mischer-Wärmetauscher als eine Art Entspannungsgefäss in einem Entspannungsverdampfer einsetzen.

Infolge des stetigen Druckverlusts im Mischer-Wärmetauscher, insbesondere im Fluitec Mischer-Wärmetauscher, erfolgt die Verdampfung der flüchtigen Anteile des Fluidgemischs äusserst schonend. Dank der stetigen Zugabe von Wärme über die Länge des Mischer-Wärmetauschers kann die Temperatur des Fluidgemischs nicht mit gleicher Geschwindigkeit abkühlen wie sich der Druck entspannt, da die Temperaturänderung den Wärme- und Stoffübertragungsmechanismen an der Phasengrenzfläche Wasser/Dampf unterliegt, welche langsamer verlaufen. Ein entstehender Siedezeitverzug kann somit zur Erhöhung der Verdampfungsleistung genutzt werden. Dadurch kann wiederum ein tieferer Entspannungsdruck im Trennungsgefäss verwendet werden. Dieser kann so tief gewählt werden, dass hochviskose Gemische nicht einfrieren.

Entstehende Dampfblasen koaleszieren im Mischer-Wärmetauscher, da das Fluidgemisch über annähernd die gesamte Länge des Mischer-Wärmetauschers und über den gesamten durchströmten Querschnitt stetig sowie mit sich ändernden Radialrichtungen gemischt wird. Dadurch wird das Gemisch stets innig kontaktiert und seine Temperatur wird maximal homogenisiert.

In einer bevorzugten Ausführungsform ist zwischen dem Mischer-Wärmetauscher und dem Trenngefäss eine Verbindungsleitung, insbesondere ein Verbindungsrohr vorhanden. Dies ermöglicht einen schaumarmen Austrag der Zweiphasenströmung in das Trenngefäss.

Üblicherweise ist eine Förderpumpe vorhanden zum Fördern des Fluidgemischs und zum Aufbau eines ersten Drucks, wobei die Förderpumpe in Strömungsrichtung vor dem Wärmeübertrager angeordnet ist.

Als Wärmeübertrager zum Heizen des Fluidgemischs eignen sich bekannte, insbesondere kontinuierlich arbeitende Wärmeübertrager, wie beispielsweise Rohrbündel- oder Platten-Wärmetauscher sowie Mischer-Wärmetauscher für besonders sensitive .Fluidgemische

Als Druckreduzierer eignen sich ebenfalls die bekannten Mittel, wie beispielsweise ein Ventil, eine Düse, eine Blende, ein Lochplatte oder eine Verengung.

Das Trenngefäss ist ein Gefäss mit gegenüber dem Mischer-Wärmetauscher vergrössertem Volumen, beispielsweise ein bekanntes Entspannungsgefäss. In diesem Trenngefäss findet eine Restentspannung statt. Es weist üblicherweise einen Abzug oder eine Ableitung für den Brüden und einen Sammelbereich für das Restgemisch, d.h. den Sumpf, auf. Der Sumpf kann über ein Förderorgan, üblicherweise eine Pumpe oder ein Extruder, zu weiteren Prozessvorrichtungen gefördert werden.

Der Mischer-Wärmetauscher kann stehend oder liegend angeordnet sein. Ist er stehend angeordnet, so befindet sich sein Eingang unten und sein Ausgang oben bzw. umgekehrt.

Optional kann im Trenngefäss ein Füllstandsensor zur Detektion oder Messung eines Füllstandes vorhanden sein. Die Detektion oder Messung kann beispielsweise mittels Radar erfolgen. Optional kann dem Fluidgemisch vor dem Mischer-Wärmetauscher ein Schleppmittel zugegeben werden. Optional wird das Fluidgemisch im Mischer-Wärmetauscher in einen metastabilen Bereich verdampft, so dass es im Fluidgemisch zu einer kontrollierten Kristallbildung kommt.

Optional kann die Vorrichtung zwei- oder mehrstufig ausgebildet sein, wobei jeweils einem Mischer-Wärmetauscher ein Trenngefäss folgt und anschliessend wiederum ein oder mehrerer Paare von Mischer-Wärmetauschern und Trenngefässen angeordnet sind. Dazwischen können optional weitere Druckreduzierer angeordnet sein.

### KURZE BESCHREIBUNG DER ZEICHNUNGEN

Weitere Vorteile, Merkmale und Einzelheiten der Erfindung ergeben sich aus der nachfolgenden Beschreibung bevorzugter Ausführungsbeispiele sowie anhand der Zeichnung, die lediglich zur Erläuterung dient und nicht einschränkend auszulegen ist. Die Zeichnung zeigt schematisch in
- Figur 1: einen erfindungsgemässen Entspannungsverdampfer in einer ersten Ausführungsform;
- Figur 2: einen erfindungsgemässen Entspannungsverdampfer in einer zweiten Ausführungsform und
- Figur 3: ein Fluitec Mischer-Wärmetauscher in einer ersten Ausführungsform.

### BESCHREIBUNG BEVORZUGTER AUSFÜHRUNGSFORMEN

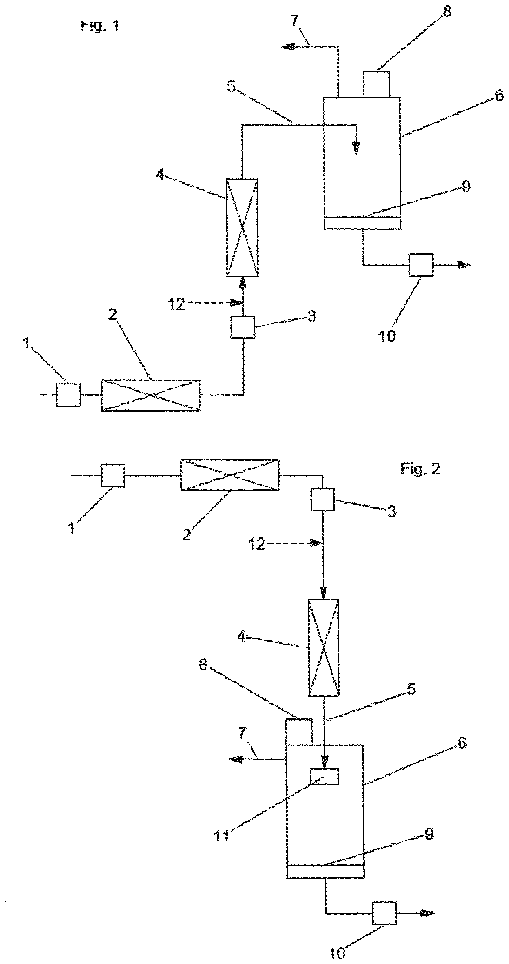

Figur 1 zeigt einen erfindungsgemässen Entspannungsverdampfer mit einer Förderpumpe 1, einem Wärmeübertrager 2, einem Druckreduzierer 3, einem Mischer-Wärmetauscher 4, einer Verbindungsleitung 5 und einem Trenngefäss 6. Der untere Bereich des Trenngefässes 6 bildet einen Sammelbereich 9. In einem oberen Bereich, vorzugsweise im obersten Bereich ist eine Ableitung oder ein Abzug 7 vorhanden. Optional kann ein Füllstandsensor 8 vorhanden sein.

Der Mischer-Wärmetauscher 4 ist in diesem Beispiel stehend mit unterem Eingang und oberen Ausgang angeordnet.

Optional kann zwischen Druckreduzierer 3 und Mischer-Wärmetauscher 4 eine Zuleitung 12 für ein Schleppmittel vorhanden sein.

Ein Fluidgemisch wird mittels der Förderpumpe 1 dem Wärmeübertrager 2 zugeführt. Dort wird das Fluidgemisch erhitzt und ein Druck aufgebaut. Anschliessend wird das Fluidgemisch zum Druckreduzierer 3 gefördert, wo es auf einen ersten Druck P1 entspannt wird und so in den Mischer-Wärmetauscher 4 gelangt. Im Mischer-Wärmetauscher 4 wird es wieder erwärmt oder auf der Temperatur gehalten und gleichzeitig wie bereits oben beschrieben gleichmässig durchmischt. Es finden ein Siedeverzug und ein Aufschäumen statt. Das entstandene Zweiphasengemisch wird über die Verbindungsleitung 5 zum Trenngefäss 6 geführt und dort bei einem im Vergleich zum ersten Druck P1 tieferen Druck P2 restentspannt. Der Brüden 7 wird über den Abzug weggeleitet und das Restgemisch im Sammelbereich 9 gesammelt und anschliessend mittels der Saugpumpe oder dem Extruder 10 weggefördert.

In Figur 2 ist der Mischer-Wärmetauscher ebenfalls stehend dargestellt, wobei hier der Eingang oben und der Ausgang unten angeordnet ist. Gleiche Teile sind mit gleichen Bezugsziffern wie in Figur 1 bezeichnet. Zusätzlich ist hier noch ein Verteiler 11 vorhanden, z.B. eine Dusche, um das in das Trenngefäss einströmende Fluid gleichmässig zu verteilen. Derartige Verteiler 11 sind im Stand der Technik bekannt.

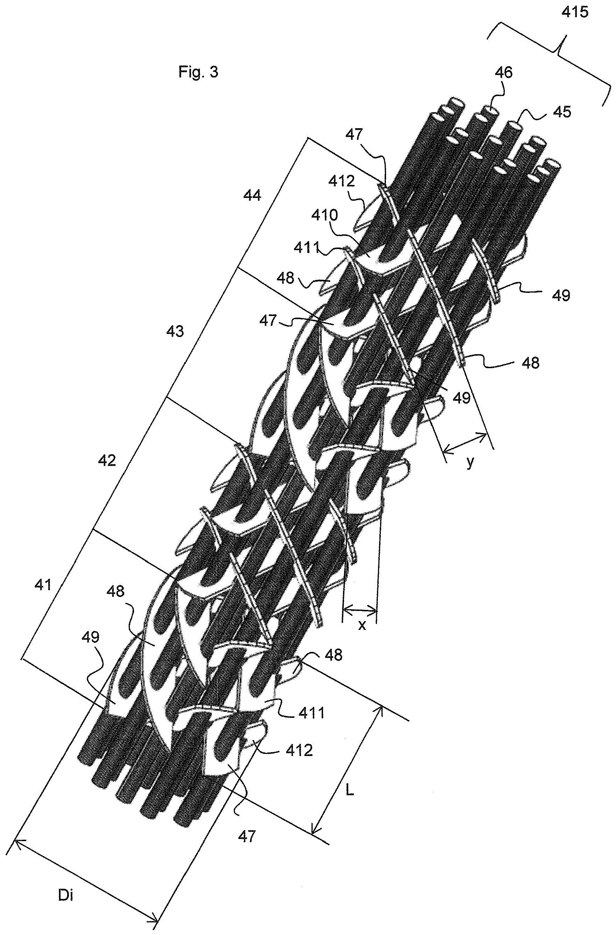

In Figur 3 ist ein Beispiel eines bevorzugten Mischer-Wärmetauschers dargestellt. Es ist die einer der oben genannten Fluitec Mischer-Wärmetauscher, wie sie in den oben genannten Patentpublikationen ausführlich beschrieben werden. Die anderen oben erwähnten Fluitec Mischer-Wärmetauscher lassen sich ebenfalls verwenden. Der Mischer-Wärmetauscher gemäss Figur 3 sei hier deshalb nur noch kurz erläutert:
Der Mischer-Wärmetauscher gemäss Figur 3 weist ein nicht dargestelltes Aussenrohr mit einem Strömungskanal für strömende zu temperierende Medien auf. In diesem Aussenrohr ist mindestens ein Mischeinsatz, vorzugsweise sind mindestens zwei Mischeinsätze mit einem integrierten Rohrbündel 415 angeordnet. Durch die Rohre 45, 46 des Rohrbündes 415 fliesst das Wärmeübertragungsmedium.

Jeder Mischeinsatz 41, 42, 43, 44 besteht aus mehreren Stegplatten 47, 48, 49, 410, 411, 412, welche als Gruppe die Mischelemente bilden. Jeder Mischeinsatz 41, 42, 43, 44 weist vier sich kreuzend hindurchreichende Stegplatten 47,48 und acht gekürzte sich kreuzende Stegplatten 49, 410, 411, 412 auf. Das Verhältnis der maximalen Stegbreite x zum Rohrdurchmesser Di beträgt 0.25 und das Verhältnis der Länge L eines Mischelementes zum Rohrdurchmesser Di beträgt 0.8 bis 1.2 und der Winkel der Stegplatten zur Rohrachse beträgt 42° bis 48°. Zusätzlich weist das Verhältnis des senkrechten Abstandes (y) in jedem Mischeinsatz 41, 42, 43, 44 zum Rohrdurchmesser Di einen Wert von 0.2 bis 0.4 auf. Die Mischeinsätze 41, 42, 43, 44 sind im Strömungskanal hintereinander angeordnet, wobei die aneinander grenzenden Einsätze bezüglich der Längsachse des Einsatzes, d.h. der Längsachse der Rohre, um einen Winkel von 90° gegeneinander verdreht sind. Wie bereits oben erwähnt lassen sich die einzelnen Mischeinsätze auch in einem anderen Muster drehen. Z.B. kann jeder dritte, vierte oder fünfte Mischeinsatz gedreht sein.

Die Mischeinsätze besitzen Ellipsen, in welche man mindestens einen Rohr 45, 46 des Rohrbündels 415 einschiebt und am Mischeinsatz befestigt. Die Rohre sind beispielsweise mit den Stegplatten verlötet.

Im Folgenden werden zwei Anwendungsbeispiele sowie ein Vergleichsbeispiel genannt:

### VERGLEICHSBEISPIEL 1

Das Vergleichsbeispiel wird in einem konventionellen Entspannungsverdampfer mit wesentlicher Entspannung in einem Entspannungsbehälter durchgeführt. Ein auf 120° erhitztes Fluidgemisch bestehend aus Wasser und gelöstem Zucker wird über ein Ventil direkt im Entspannungsbehälter entspannt. Der Druck P1 wird von 3 bar auf P2 100 mbar entspannt, was zu einem sehr starken Aufschäumen im Entspannungsbehälter führt. Das Aufschäumen ist so stark, dass der Entspannungsbehälter schlagartig mit Schaum gefüllt ist, so dass kein Destillat über den Brüden abgeführt werden kann. Der Prozess muss somit vollständig abgebrochen werden. Erhöht man den Druck P2 im Entspannungsbehälter, so verlangsamt sich das Aufschäumen. Trotzdem kann der Prozess nicht mit einer hohen Betriebssicherheit geführt werden, da es immer wieder zu einem heftigen Aufschäumen kommt. Eine kontinuierliche Prozessführung ist somit nur bei einer minimalen Verdampfungsleistung möglich.

### BEISPIEL 1

Es wird die Vorrichtung gemäss Figur 1 verwendet, wobei als Trenngefäss derselbe Entspannungsbehälter wie im Vergleichsbeispiel eingesetzt wird, wobei ein Fluitec Mischer-Wärmetauscher gemäss Figur 3 verwendet wird. Die Entspannung erfolgt nun über den Druckreduzierer, hier ein Ventil, direkt in den Mischer-Wärmetauscher. Überraschenderweise beobachtet man bei vergleichbaren Prozessbedingungen kein massives Aufschäumen mehr. Über ein Schauglas am Austritt des Mischer-Wärmetauschers ist ersichtlich, dass es zu einem ruhigen Austritt von Gas und Flüssigkeit im Überlauf kommt. Es wird beobachtet, dass kontinuierlich grosse Blasen aus dem Fluitec Mischer-Wärmetauscher austreten. Die Flüssigkeit strömt praktisch pulsationsfrei in das Trenngefäss. Es wurde auch beobachtet, dass die Verdampfungsleistung um Faktor 50 grösser ist, was natürlich auf die zusätzliche Wärmequelle zurückzuführen ist. Der vertikale Einbau von unten nach oben eignet sich somit zur Verdampfung eines sehr hohen Anteils an flüchtiger Dampfmenge. Die Viskosität kann dabei durch das Aufkonzentrieren auf Viskositäten bis 500 Pas ansteigen.

### BEISPIEL 2

Das zweite Anwendungsbeispiel betrifft eine Entgasung mit Hilfe des Entspannungsverdampfers gemäss Figur 2.

Da bei einer Polymerisation der chemische Umsatz nicht vollständig abläuft, findet man im polymerisierten Produkt noch Monomere, Oligomere, Abbau- und Zersetzungsprodukte sowie die verschiedensten Additive. Diese Bestandteile müssen dem Polymer zum Verbessern der Produktequalität (Trübung, Geruch, Festigkeit), zum Vermeiden gesundheitlicher Schädigung (aggressive Medien) und zum Verringern der Kosten (Rohstoffrückgewinnung) entzogen werden. Im weitesten Sinne nennt man in der Kunststofftechnik die Einheitsoperation zur Entfernung solcher flüchtigen Bestandteile aus Gas/Flüssig-, Flüssig/Flüssig- und Fest/Flüssiggemischen Entgasen.

Im erfindungsgemässen Entspannungsverdampfer gemäss Figur 2 wird die Polymerlösung im Wärmetauscher 2 vorerhitzt, im Fluitec Mischer-Wärmetauscher 4 entspannt und im Trenngefäss 6 getrennt.

Da Polymere in der Regel sehr viskos sind und Viskositäten bis 50'000 Pas aufweisen können, haben zusätzliche Effekte auf die Verdampfung einen Einfluss. Neben dem Niveau des Unterdruckes im Verdampfer hängt das Entgasungsergebnis einerseits von der Leistung des Wärmetauschers 2 sowie von der Bauart des Entgasungsapparates ab. Andererseits sind folgende Zusammenhänge gerade bei steigender Viskosität zu beachten:
- Mit zunehmender Phasengrenzfläche und abnehmender Schichtdicke steigt die Entgasungsleistung an. Phasengrenzfläche und Schichtdicke werden direkt durch die Abmessung und die Geometrie der Entgasungsvorrichtung bestimmt. Es ist daher vorteilhaft, das Polymer in der Trennkammer 6 über den Verteiler 11 in dünne Schichten zu verteilen, so dass eine effiziente Entgasung gewährleistet ist.
- Mit zunehmender Temperatur steigt die Entgasungsleistung an, allerdings sind der Temperatur wegen der üblicherweise einsetzenden Produkteschädigung Grenzen gesetzt. Daher ist der Einsatz einer zusätzlichen Wärmequelle, d.h. des Mischer-Wärmetauschers 4 vorteilhaft, welcher insbesondere global über den ganzen Querschnitt und alternierenden in quer zur Längsachse mischen kann, so dass der Wärmeeintrag homogen erfolgt. Insbesondere die Verwendung des Fluitec Mischer-Wärmetauscher hat sich hier bewährt.
- Mit abfallendem Druck steigt die Entgasungsleistung an. Unterdrücke von 5 - 200 mbar sind speziell in der Ausführungsform gemäss Figur 2 vorteilhaft. Bei zu grossen Dampfgeschwindigkeiten kann es jedoch zum Mitreissen von Polymerschmelze in den Entgasungsschacht, d.h. dem Abzug 7 führen. Daher ist eine Teilentgasung im Mischer-Wärmetauscher 4, insbesondere im Fluitec Mischer-Wärmetauscher, besonders vorteilhaft.
- Zunehmende Verweilzeit des Gutes in der Entgasungskammer beeinflusst die Entgasungsleistung positiv. Allerdings muss das Verweilzeitspektrum eng gewählt werden, da sich Depolymerisationseffekte negativ auf die Entgasungsleistung auswirken können. Wird nun ein Teil der Entgasung in den Mischer-Wärmetauscher 4, insbesondere im Fluitec Mischer-Wärmetauscher, verlagert und dabei eine Strömungsrichtung von oben nach unten berücksichtigt, so bleibt die Verweilzeit bei hoher Entgasungsleistung kurz und das Verweilzeitspektrum sehr eng. Dies insbesondere deshalb, wenn der Querschnitt des Mischer-Wärmetauschers in der Hauptströmungsrichtung geometrisch überall so definiert ist, dass die Maldistribution auf ein Minimum reduziert wird und dass eine enge Verweilzeitverteilung gewährleistet ist. Dieser Aufbau begünstigt die Leistung des Entspannungsverdampfers besonders.
- Mit dem Einsatz von Schleppmitteln lässt sich der Molanteil der abzutrennenden Komponente in der Dampfphase reduzieren. Die Entgasungsleistung steigt dadurch an, da dies zu einer Reduktion der Gleichgewichtskonzentration führt. Da der Mischer-Wärmetauscher 4, insbesondere der Fluitec-Mischer Wärmetauscher, gleichzeigt die Wärmezufuhr bei globaler homogener Mischleistung sicherstellt, können optional vor dem Mischer-Wärmetauscher 4 zusätzliche Schleppmittel zugegeben werden. Der Zusatz von Schleppmittel kann den Einsatz einer Einstufigen Entspannungsverdampfung ermöglichen. Eine zweistufige Ausführung, d.h. eine Verwendung von zwei Paaren aufeinanderfolgender Mischer-Wärmetauscher/Trenngefassen ist in Ausnahmefällen auch denkbar.

Bekannte Schleppmittel sind Wasser, Methanol, CO2, Wasserdampf und Stickstoff, welche mit dem Mischer-Wärmetauscher vor der Trennkammer, hier die Entgasungskammer, eingemischt resp. eindispergiert werden. Entscheidend für den Aufbau des Systems ist die geforderte Eingangs- und Restkonzentration am Austritt aus dem Entspannungsverdampfer.

So kann beispielsweise bei einem Polystyrolgemisch mit 20% leichtflüchtigen Dämpfen mit einem Differenzdruck von max. 10 bar ein Restmengenanteil von 600 bis 1100 PPM ohne Schleppmittel und ein Restmengenanteil von 100 bis 400 PPM erreicht werden.

Der erfindungsgemässe Entspannungsverdampfer mit zusätzlicher Wärmequelle ermöglicht ein schonendes und betriebssicheres Verdampfen eines Fluidgemischs.

### BEZUGSZEICHENLISTE

- 1: Förderpumpe
- 2: Wärmeübertrager
- 3: Druckreduzierer
- 4: Mischer-Wärmetauscher
- 41: Mischeinsatz
- 42: Mischeinsatz
- 43: Mischeinsatz
- 44: Mischeinsatz
- 45: Rohr
- 46: Rohr
- 49: Stegplatte
- 410: Stegplatte
- 411: Stegplatte
- 412: Stegplatte
- 415: Rohrbündel
- 5: Verbindungsrohr
- 6: Trenngefäss
- 7: Ableitung für den Brüden
- 8: Füllstandssensor
- 9: Sammelbereich für den Sumpf
- 10: Förderorgan
- 11: Verteiler
- 12: Schleppmittelzuleitung

## Patentansprüche

1. Kontinuierlich arbeitender Entspannungsverdampfer für die Trennung eines Fluidgemischs, wobei der Entspannungsverdampfer einen Wärmeübertrager (2), einen Entspannungsbehälter und ein Trenngefäss (6) aufweist, **dadurch gekennzeichnet,**
**dass** der Entspannungsbehälter durch einen Mischer-Wärmetauscher (4) gebildet ist, wobei der Mischer-Wärmetauscher (4) ein Aussenrohr mit mindestens einem im Aussenrohr angeordneten Mischeinsatz (41, 42, 43, 44) aufweist und wobei das Aussenrohr einen Strömungskanal bildet zur Aufnahme eines Vollstroms des Fluidgemischs,
**dass** in Strömungsrichtung des Fluidgemischs nach dem Wärmeübertrager (2) und vor dem Mischer-Wärmetauscher (4) ein Druckreduzierer (3) vorhanden ist und dass das Trenngefäss (6) in Strömungsrichtung dem Mischer-Wärmetauscher (4) nachgeschaltet ist.

2. Entspannungsverdampfer nach Anspruch 1, wobei der Mischer-Wärmetauscher (4) mindestens zwei in Längsrichtung des Mischer-Wärmetauschers hintereinander angeordnete Mischelemente (41, 42, 43, 44) aufweist, wobei mindestens zwei der Mischelemente (41, 42, 43, 44) um 90° versetzt zueinander angeordnet sind.

3. Entspannungsverdampfer nach einem der Ansprüche 1 oder 2, wobei der Mischer-Wärmetauscher mindestens einen Mischeinsatz (41, 42, 43, 44) und ein Rohrbündel aufweist, wobei der Mischeinsatz (41, 42, 43, 44) Stegplatten aufweist, wobei das Rohrbündel aus mehreren Rohren gebildet ist, welche sich in Längsrichtung des Mischer-Wärmetauschereinsatzes erstrecken, und wobei die Stegplatten in einem schrägen Winkel zu den Rohren angeordnet und mit diesen fest verbunden sind und wobei die Stegplatten eines Mischeinsatzes (41, 42, 43, 44) ein Mischelement bildet.

4. Entspannungsverdampfer nach Anspruch 3, wobei sich mindestens ein Teil der Stegplatten durch das Rohrbündel hindurchreichen.

5. Entspannungsverdampfer nach einem der Ansprüche 3 oder 4, wobei die Stegplatten paarweise gekreuzt zueinander angeordnet sind.

6. Entspannungsverdampfer nach einem der Ansprüche 1 bis 5, wobei zwischen Mischer-Wärmetauscher (4) und Trenngefäss (6) eine Verbindungsleitung (5) vorhanden ist.

7. Entspannungsverdampfer nach einem der Ansprüche 1 bis 6, wobei er ferner eine Förderpumpe (1) aufweist zum Fördern des Fluidgemischs und zum Aufbau eines ersten Drucks, wobei die Förderpumpe (1) in Strömungsrichtung vor dem Wärmeübertrager (2) angeordnet ist.

8. Entspannungsverdampfer nach einem der Ansprüche 1 bis 7, wobei der Mischer-Wärmetauscher (4) stehend angeordnet ist, wobei er einen unten angeordneten Eingang und einen oben angeordneten Ausgang aufweist oder wobei er einen oben angeordneten Eingang und einen unten angeordneten Ausgang aufweist.

9. Entspannungsverdampfer nach einem der Ansprüche 1 bis 7, wobei der Misch-Wärmetauscher (4) liegend angeordnet ist.

10. Entspannungsverdampfer nach einem der Ansprüche 1 bis 9, wobei das Trenngefäss (6) eine Ableitung (7) für einen Brüden und einen Sammelbereich (9) für einen Sumpf aufweist.

11. Verfahren zum Trennen eines Fluidgemischs mittels kontinuierlich arbeitenden Entspannungsverdampfung in einem kontinuierlich arbeitenden Entspannungsverdampfer gemäss einem der Ansprüche 1 bis 10, wobei das Verfahren folgende Schritte aufweist:
- Fördern eines Fluidgemischs mit Druckaufbau auf einen ersten Druck (P1),
- Erwärmen des Fluidgemischs in einem Wärmeübertrager,
- nachfolgendes Teilentspannen des erwärmten Fluidgemischs in einem Druckreduzierer,
- nachfolgendes Zuführen in einen Mischer-Wärmetauscher, wobei dem Fluidgemisch im Mischer-Wärmetauscher stetig Wärme zugeführt wird und wobei der Druck des sich im Mischer-Wärmetauscher befindlichen Fluidgemischs stetig abgesenkt wird und
- nachfolgende Restentgasung des Fluidgemischs bei einem zweiten Druck (P2), welcher kleiner ist als der erste Druck (P1) in einem Trenngefäss, wobei ein Brüden aus dem Trenngefäss abgeleitet und ein Restgemisch des Fluidgemischs gesammelt wird.

12. Verfahren nach Anspruch 11, wobei das Fluidgemisch vom Mischer- Wärmetauscher über eine Verbindungsleitung zum Trenngefäss geführt wird.

13. Verfahren nach einem der Ansprüche 11 und 12, wobei das Fluidgemisch im Mischer-Wärmetauscher über annähernd die gesamte Länge des Mischer-Wärmetauschers (4) und über seine gesamten flüssigkeitsdurchströmten Querschnitte stetig und mit sich ändernden Radialrichtungen gemischt wird.

## Claims

1. Continuously working flash evaporator for the separation of a fluid mixture, wherein the flash evaporator has a heat transfer means (2), a flash vessel and a separating vessel (6), **characterized in that** the flash vessel is formed by a mixer heat exchanger (4), wherein the mixer heat exchanger (4) has an outer tube with at least one mixing insert (41, 42, 43, 44) arranged in the outer tube, and wherein the outer tube forms a flow channel for receiving a full flow of the fluid mixture,
**in that** a pressure reducer (3) is present downstream of the heat transfer means (2) and upstream of the mixer heat exchanger (4) in the flow direction of the fluid mixture, and
**in that** the separating vessel (6) is arranged downstream of the mixer heat exchanger (4) in the flow direction.

2. Flash evaporator according to Claim 1, wherein the mixer heat exchanger (4) has at least two mixing elements (41, 42, 43, 44) which are arranged one behind the other in the longitudinal direction of the mixer heat exchanger, wherein at least two of the mixing elements (41, 42, 43, 44) are arranged offset by 90° with respect to one another.

3. Flash evaporator according to either of Claims 1 and 2, wherein the mixer heat exchanger has at least one mixing insert (41, 42, 43, 44) and a tube bundle, wherein the mixing insert (41, 42, 43, 44) has web plates, wherein the tube bundle is formed from a plurality of tubes which extend in the longitudinal direction of the mixer heat exchanger insert, and wherein the web plates are arranged at an oblique angle to the tubes and are connected fixedly thereto, and wherein the web plates of a mixing insert (41, 42, 43, 44) form a mixing element.

4. Flash evaporator according to Claim 3, wherein at least some of the web plates extend through the tube bundle.

5. Flash evaporator according to either of Claims 3 and 4, wherein the web plates are arranged crossed with respect to one another in pairs.

6. Flash evaporator according to one of Claims 1 to 5, wherein a connecting line (5) is present between the mixer heat exchanger (4) and the separating vessel (6).

7. Flash evaporator according to one of Claims 1 to 6, wherein said evaporator further has a delivery pump (1) for delivering the fluid mixture and for building up a first pressure, wherein the delivery pump (1) is arranged upstream of the heat transfer means (2) in the flow direction.

8. Flash evaporator according to one of Claims 1 to 7, wherein the mixer heat exchanger (4) is arranged vertically, wherein said heat exchanger has an inlet arranged at the bottom and an outlet arranged at the top, or wherein said heat exchanger has an inlet arranged at the top and an outlet arranged at the bottom.

9. Flash evaporator according to one of Claims 1 to 7, wherein the mixer heat exchanger (4) is arranged horizontally.

10. Flash evaporator according to one of Claims 1 to 9, wherein the separating vessel (6) has a discharge line (7) for a vapour and a collecting region (9) for a bottom product.

11. Method for separating a fluid mixture by means of continuously working flash evaporation in a continuously working flash evaporator according to one of Claims 1 to 10, wherein the method has the following steps:
- delivering a fluid mixture with a build-up of pressure to a first pressure (P1),
- heating the fluid mixture in a heat transfer means,
- subsequently partially expanding the heated fluid mixture in a pressure reducer,
- subsequently feeding into a mixer heat exchanger, wherein heat is supplied continuously to the fluid mixture in the mixer heat exchanger, and wherein the pressure of the fluid mixture situated in the mixer heat exchanger is reduced continuously, and
- subsequently performing residual degassing of the fluid mixture at a second pressure (P2), which is lower than the first pressure (P1), in a separating vessel, wherein a vapour is discharged from the separating vessel and a residual mixture of the fluid mixture is collected.

12. Method according to Claim 11, wherein the fluid mixture is guided from the mixer heat exchanger to the separating vessel via a connecting line.

13. Method according to either of Claims 11 and 12, wherein the fluid mixture in the mixer heat exchanger is mixed continuously over approximately the entire length of the mixer heat exchanger (4) and over the liquid throughflow cross sections thereof, in their entirety, and with changing radial directions.

## Revendications

1. Evaporateur par détente opérant en continu pour la séparation d'un mélange de fluides, dans lequel l'évaporateur par détente présente un échangeur de chaleur (2), un récipient de détente et une cuve de séparation (6), **caractérisé**
**en ce que** le récipient de détente est formé par un échangeur de chaleur-mélangeur (4), dans lequel l'échangeur de chaleur-mélangeur (4) présente un tube extérieur avec au moins un insert de mélange (41, 42, 43, 44) disposé dans le tube extérieur et dans lequel le tube extérieur forme un canal d'écoulement destiné à contenir un courant total du mélange de fluides,
**en ce qu'**il se trouve un réducteur de pression (3) après l'échangeur de chaleur (2) et avant l'échangeur de chaleur-mélangeur (4) dans la direction d'écoulement du mélange de fluides, et en ce que la cuve de séparation (6) est disposée en aval de l'échangeur de chaleur-mélangeur (4) dans la direction d'écoulement.

2. Evaporateur par détente selon la revendication 1, dans lequel l'échangeur de chaleur-mélangeur (4) présente au moins deux éléments de mélange (41, 42, 43, 44) disposés l'un derrière l'autre dans la direction longitudinale de l'échangeur de chaleur-mélangeur, dans lequel au moins deux des éléments de mélange (41, 42, 43, 44) sont disposés avec un décalage de 90° l'un par rapport à l'autre.

3. Evaporateur par détente selon une des revendications 1 ou 2, dans lequel l'échangeur de chaleur-mélangeur présente au moins un insert de mélange (41, 42, 43, 44) et un faisceau de tubes, dans lequel l'insert de mélange (41, 42, 43, 44) présente des plaques nervurées, dans lequel le faisceau de tubes est formé de plusieurs tubes, qui s'étendent dans la direction longitudinale de l'insert d'échangeur de chaleur-mélangeur, et dans lequel les plaques nervurées sont disposées sous un angle aigu par rapport aux tubes et sont solidement fixées à ceux-ci et dans lequel les plaques nervurées d'un insert de mélange (41, 42, 43, 44) forment un élément de mélange.

4. Evaporateur par détente selon la revendication 3, dans lequel au moins une partie des plaques nervurées sont engagées à travers le faisceau de tubes.

5. Evaporateur par détente selon une des revendications 3 ou 4, dans lequel les plaques nervurées sont disposées par paires de façon croisée l'une avec l'autre.

6. Evaporateur par détente selon une des revendications 1 à 5, dans lequel il se trouve une conduite de raccordement (5) entre l'échangeur de chaleur-mélangeur (4) et la cuve de séparation (6).

7. Evaporateur par détente selon une des revendications 1 à 6, dans lequel il présente en outre une pompe d'alimentation (1) pour l'amenée du mélange de fluides et pour l'instauration d'une pression, dans lequel la pompe d'alimentation (1) est disposée avant l'échangeur de chaleur (2) dans la direction d'écoulement.

8. Evaporateur par détente selon une des revendications 1 à 7, dans lequel l'échangeur de chaleur-mélangeur (4) est disposé en position dressée, dans lequel il présente une entrée disposée dans le bas et une sortie disposée dans le haut ou dans lequel il présente une entrée disposée dans le haut et une sortie disposée dans le bas.

9. Evaporateur par détente selon une des revendications 1 à 7, dans lequel l'échangeur de chaleur-mélangeur (4) est disposé en position couchée.

10. Evaporateur par détente selon une des revendications 1 à 9, dans lequel la cuve de séparation (6) présente une évacuation (7) pour des vapeurs et une zone de collecte (9) pour un dépôt de fond.

11. Procédé de séparation d'un mélange de fluides par vaporisation par détente opérant en continu dans un évaporateur par détente opérant en continu selon une des revendications 1 à 10, dans lequel le procédé présente les étapes suivantes:
- chargement d'un mélange de fluides avec instauration d'une pression à une première pression (P1),
- chauffage du mélange de fluides dans un échangeur de chaleur,
- ensuite détente partielle du mélange de fluides chauffé dans un réducteur de pression,
- transfert ensuite dans un échangeur de chaleur-mélangeur, dans lequel on fournit en permanence de la chaleur au mélange de fluides dans l'échangeur de chaleur-mélangeur et dans lequel on abaisse en permanence la pression du mélange de fluides se trouvant dans l'échangeur de chaleur-mélangeur, et
- ensuite dégazage résiduel du mélange de fluides à une seconde pression (P2), qui est inférieure à la première pression (P1) dans une cuve de séparation, dans lequel on évacue des vapeurs hors de la cuve de séparation et on accumule un mélange résiduel du mélange de fluides.

12. Procédé selon la revendication 11, dans lequel on conduit le mélange de fluides de l'échangeur de chaleur-mélangeur à la cuve de séparation par une conduite de raccordement.

13. Procédé selon une des revendications 11 et 12, dans lequel on mélange le mélange de fluides dans l'échangeur de chaleur-mélangeur en permanence sur environ toute la longueur de l'échangeur de chaleur-mélangeur (4) et sur toute sa section transversale parcourue par le liquide et avec des directions radiales changeantes.
